# EUROPEAN PATENT APPLICATION

(11) **EP 3 524 851 A1**
(43) Date of publication of application: **14.08.2019**
(21) Application number: 17858064.3
(22) Date of filing: 08.08.2017
(51) Int. Cl.: F16H 9/18

(54) **CONTINUOUSLY VARIABLE TRANSMISSION**

(30) Priority: 06.10.2016 JP 2016197922
(71) Applicant: Kabushiki Kaisha F.C.C., Hamamatsu-shi, Shizuoka 431-1394 (JP)
(72) Inventor: KINE, Yuta, Hamamatsu-shi Shizuoka 431-1304 (JP); KATAOKA, Makoto, Hamamatsu-shi Shizuoka 431-1304 (JP); AONO, Kaoru, Hamamatsu-shi Shizuoka 431-1304 (JP); YOKOMICHI, Yuta, Hamamatsu-shi Shizuoka 431-1304 (JP)
(74) Representative: Stöckeler, Ferdinand
(86) International application number: PCT/JP2017/028748
(87) International publication number: WO 2018/066224

(57) **Abstract**

A continuously variable transmission that can suppress the size increase, complication, and weight increase of the device configuration is provided. A continuously variable transmission 100 includes a drive pulley 101 that is connected to a crank shaft 90. The drive pulley 101 includes a fixed drive plate 102 that is rotationally driven directly by driving force of an engine and a movable drive plate 110 that approaches or become separated with respect to the fixed drive plate 102 in accordance with centrifugal force by rotational drive of the crank shaft 90. A displacement resistor 120 including a rod body abuts on the movable drive plate 110 in the state in which the fixed drive plate 102 is penetrated. The displacement resistor 120 is pressed by a resistance spring 134 of a pressing mechanism 130 provided outside the fixed drive plate 102. In the pressing mechanism 130, a variable mechanism 140 adjusts pressing force by the resistance spring 134.

## Description

### TECHNICAL FIELD

The present invention relates to a continuously variable transmission that transmits rotational driving force of an engine of a motorcycle to a clutch in a stepless manner.

### BACKGROUND ART

A continuously variable transmission that transmits rotational driving force of an engine of a motorcycle to a clutch in a stepless manner has been used typically. For example, the continuously variable transmission disclosed in Patent literature 1 can select the ease of displacement of a movable pulley piece of the movable pulley piece and the fixed pulley piece forming a driving pulley to one side of the fixed pulley in two stages. Thus, the traveling mode of a motorcycle can be adjusted in two stages, the ECO mode and the drive mode.

### CITATION LIST

### PATENT LITERATURE

Patent literature 1: JP-A-2013-213520

However, the continuously variable transmission described in Patent literature 1, is provided with two weight rollers that is capable of reciprocating displacement in the centrifugal direction to make the ease of the displacement of the movable pulley piece selectable in two stages and also provided with a movable plate for regulating the displacement of one of the weight rollers in the centrifugal direction. For these reasons, there has been an issue that the device configuration becomes large, complicated, and heavy.

The present invention has been made to address the above issue. An object of the present invention is to provide a continuously variable transmission that can suppress the size increase, complication, and weight increase of the device configuration.

### SUMMARY OF THE INVENTION

In this case, as a pressing section, an elastic body that displaces the displacement resistor to the side of the movable drive plate and made of reaction materials such as springs and urethane resin, a pneumatic or hydraulic cylinder, an electric motor, a solenoid, a magnet, or the like may be used.

According to the feature of the present invention having the above configuration, a continuously variable transmission uses the displacement resistor and the pressing section to directly apply a load (reaction force) with respect to the movable drive plate that is displaced to the side of the fixed drive plate among the fixed drive plate and the movable drive plate forming the drive pulley. Therefore, it is possible to suppress the size increase, complication, and weight increase of the device configuration compared with the typical technology.

Another feature of the present invention is that the continuously variable transmission further may include a variable section that varies pressing force by the pressing section. In this case, as a variable section, a feed screw mechanism that moves the position of the displacement resistor or the pressing section, a feed screw mechanism that changes the deformation amount of elastic bodies such as springs or urethane resin materials used as pressing sections, a pressing mechanism including wire or the like, and a control device that controls the operation of the electric motor and solenoid used as pressing sections, or the like may be used.

According to another feature of the present invention having the above configuration, the continuously variable transmission includes a variable section that varies pressing force by the pressing section and can freely change the shift characteristics.

Another feature of the present invention is that in the continuously variable transmission, the pressing section may include a resistance spring including a coil spring.

According to another feature of the present invention having the above configuration, in the continuously variable transmission, the pressing section includes a resistance spring that is including a coil spring. Therefore, the device configuration can be simplified, and it is possible to suppress the size increase, complication, and weight increase of the device configuration.

Another feature of the present invention is that in the continuously variable transmission, a plurality of the displacement resistors may include a rod body and is adjacently disposed along a circumferential direction around the crank shaft, and the displacement resistors may be held by a pressing side holding body having ends on a side of the pressing section formed in a ring shape and a plate side holding body having ends on a side of the movable drive plate formed in a ring shape.

According to another feature of the present invention having the above configuration, in the continuously variable transmission, the displacement resistor includes a plurality of rod bodies disposed outside the crank shaft. Further, the displacement resistors are held by the pressing side holding body and the plate side holding body. Thus, the rigidity of the overall displacement resistors can be increased. Further, via the pressing side holding body and the plate side holding body, a wide range of surface contact that increases the contact surface with respect to the pressing section and the movable drive plate can be obtained. Therefore, issues such as abrasion and seizure due to friction can be suppressed.

In addition, another feature of the present invention is that the continuously variable transmission may include a sliding material that is disposed between the plate side holding body and the movable drive plate and reduces friction between both members. In this case, as a sliding material, materials having a friction coefficient lower than the friction coefficient between the plate side holding body and the movable drive plate (for example, a resin material) or materials that decrease the friction coefficient between the plate side holding body and the movable drive plate (for example, lubricating oil or grease) may be used.

According to another feature of the present invention having the above configuration, the continuously variable transmission includes a sliding material that is disposed between the plate side holding body and the movable drive plate and reduces friction between both members. Therefore, distortion of the displacement resistor, abrasion of the plate side holding body, and seizure between both members can be suppressed.

In addition, another feature of the present invention is that in the continuously variable transmission, the displacement resistor may be disposed to penetrate the fixed drive plate, and the pressing section may be provided on an opposite side of the movable drive plate with respect to the fixed drive plate.

According to another feature of the present invention having the above configuration, in the continuously variable transmission, the displacement resistor is disposed to penetrate the fixed drive plate. Further, the pressing section is provided on the opposite side of the movable drive plate with respect to the fixed drive plate. Therefore, it is possible to displace the movable drive plate to the position closer to the fixed drive plate. Thus, the transmission ratio can be set in a wide range, and the device configuration can be miniaturized.

### BRIEF DESCRIPTION OF THE DRAWINGS

Fig. 1 is a side sectional view schematically showing a configuration of a power transmission mechanism including a continuously variable transmission according to the present invention.
Fig. 2 is an enlarged side sectional view showing an enlarged view of the continuously variable transmission shown in Fig. 1.
Fig. 3 is an enlarged side sectional view showing a state in which the continuously variable transmission shown in Fig. 2 is rotationally driven at high rotational speed.
Fig. 4 is a perspective view showing an appearance configuration of a plate side holding body of the continuously variable transmission shown in Fig. 1.
Fig. 5 is a perspective view showing an external configuration of a displacement resistor of the continuously variable transmission shown in Fig. 1.
Fig. 6 is a perspective view showing an external configuration of a pressing side holding body of the continuously variable transmission shown in Fig. 1.
Fig. 7 is a plan view of an external configuration of a variable mechanism of the continuously variable transmission shown in Fig. 1.
Fig. 8 is a sectional view showing a state in which the variable mechanism is operated to make a transmission characteristic shift transmission speed at higher rotational speed in the continuous variable transmission shown in Fig. 1.
Fig. 9 is a sectional view showing a state in which the variable mechanism is operated to make a transmission characteristic shift transmission speed at lower rotational speed in the continuous variable transmission shown in Fig. 1.

### DESCRIPTION OF THE EMBODIMENTS

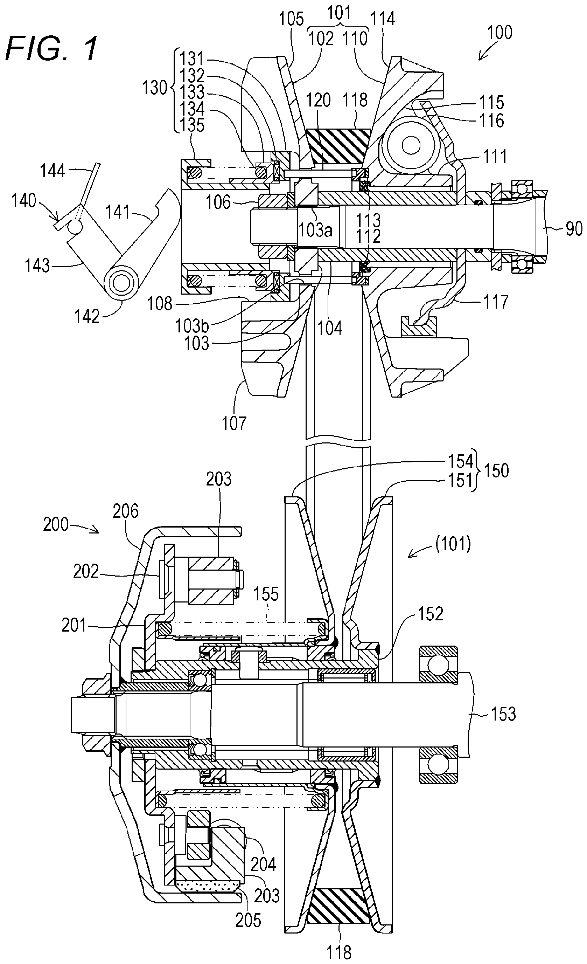

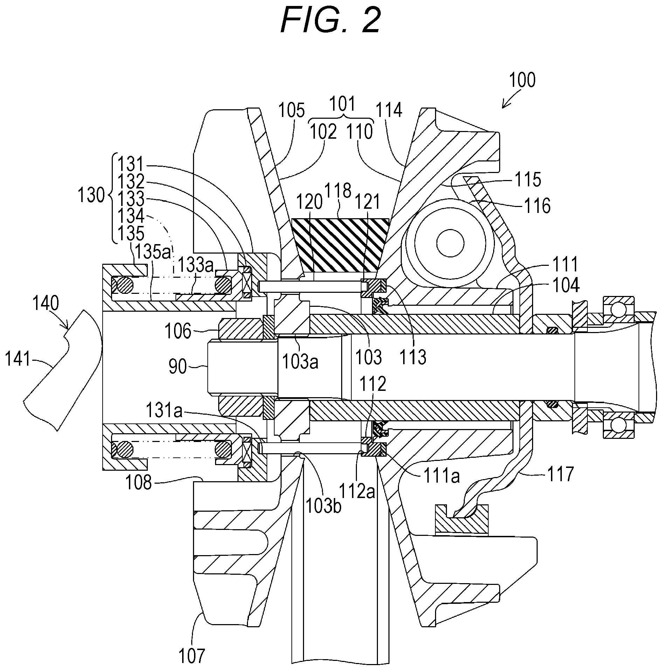

An embodiment of the continuously variable transmission according to the present invention will be described below with reference to the drawings. Fig. 1 is a side sectional view schematically showing a configuration of a continuously variable transmission 100 according to the present invention. In addition, Fig. 2 is an enlarged side sectional view showing an enlarged view of the continuously variable transmission 100 shown in Fig. 1. This continuously variable transmission 100 is a mechanical device provided between the engine and a centrifugal clutch 200 on the side of a rear wheel serving as a driving wheel mainly used in motorcycles such as scooters. The continuously variable transmission 100 transmits the rotational driving force to the centrifugal clutch 200 while changing the reduction ratio with respect to the engine rotational speed in a stepless manner.

### (Configuration of continuously variable transmission 100)

The continuously variable transmission 100 includes a drive pulley 101. The drive pulley 101 is a part that is provided on a crank shaft 90 extending from the engine and is directly rotationally driven by the rotational driving force of the engine. The drive pulley 101 mainly includes a fixed drive plate 102 and a movable drive plate 110.

The fixed drive plate 102 is a part that rotationally drives a V-belt 118 to be described later while the V-belt 118 is sandwiched between the fixed drive plate 102 and the movable drive plate 110. The fixed drive plate 102 includes a metal material (for example, an aluminum material) formed into a conical tubular shape. More specifically, the fixed drive plate 102 mainly includes a disk part 103, a conical part 105, a heat radiation fin 107, and a guide part 108.

The disk part 103 is a component that connects the fixed drive plate 102 to the crank shaft 90 and also supports the conical part 105. The disk part 103 is formed in a flat plate ring shape. In the disk part 103, a fitting hole 103a having an internal tooth-shaped spline in the center part is formed. The fitting hole 103a is spline-fitted to the outer peripheral part of the crank shaft 90. In this case, the disk part 103 is fixed on the crank shaft 90 by a nut 106 in the state in which the disk part 103 abuts on a sleeve bearing 104 that is fixedly fitted to the outer peripheral part of the crank shaft 90. The nut 106 is screwed to one end part side (left side in the figure) of the crank shaft 90. Thus, the fixed drive plate 102 is rotationally driven integrally with the crank shaft 90 constantly.

In addition, a plurality of through holes 103b is formed outside the fitting hole 103a of the disk part 103. The through hole 103b is a penetration hole where a displacement resistor 120 to be described later penetrates. The through holes 103b are formed at equal intervals outside the fitting hole 103a. In the present embodiment, 6 through holes 103b are formed at equal intervals around the fitting hole 103a. The through holes 103b are formed in a size that allows at least the displacement resistor 120 to slide therethrough. In the present embodiment, the through holes 103b are formed to have a sufficiently large inner diameter with respect to the outer diameter of the displacement resistor 120 to a degree where a clearance (so-called play) is formed outside the outer peripheral surface of the displacement resistor 120.

The conical part 105 is a component that sandwiches the V-belt 118 with a conical part 114 of the movable drive plate 110. The conical part 105 is formed in a tapered surface shape that inclines toward the outside in the radial direction of the disk part 103. The plurality of heat radiation fins 107 are formed on the surface of the conical part 105 on the opposite side of the movable drive plate 110. The heat radiation fin 107 is a component for releasing heat of the fixed drive plate 102 to the outside. The heat radiation fin 107 is provided radially around the axis of the crank shaft 90 outside the disk part 103. The guide part 108 is formed in the inner part of the heat radiation fin 107.

The guide part 108 is a component that guides a pressing side holding body 131 of a pressing mechanism 130 to be described later to in the axial direction of the crank shaft 90. The guide part 108 is formed in a tubular shape. The guide part 108 is formed to have such an inner diameter that fits the pressing side holding body 131 in a slidable state. In addition, the disk part 103, the conical part 105, the heat radiation fin 107, and the guide part 108 are integrally formed to obtain the fixed drive plate 102.

The movable drive plate 110 is a part that rotationally drives the V-belt 118 while the V-belt 118 is sandwiched between the movable drive plate 110 and the fixed drive plate 102. The movable drive plate 110 includes a metal material formed into a conical tubular shape. More specifically, the movable drive plate 110 mainly includes a tubular part 111, the conical part 114, and a roller holding part 115.

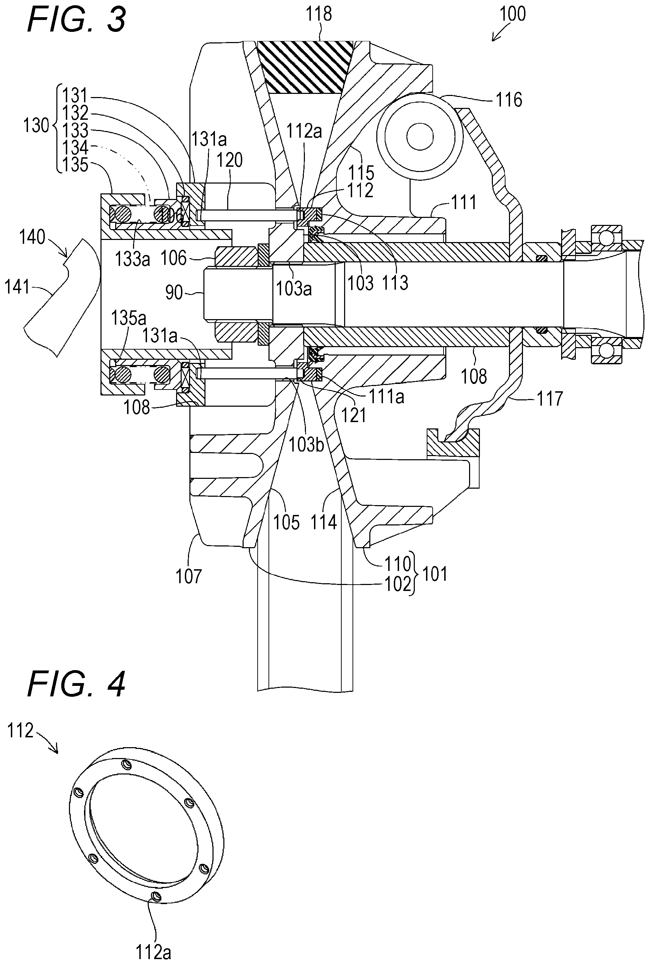

The tubular part 111 is a part where the movable drive plate 110 is supported on the crank shaft 90 and also a part that supports the conical part 114. The tubular part 111 is formed in a tubular shape. The tubular part 111 is attached on the sleeve bearing 104 via an impregnation bush. The tubular part 111 is attached slidably in the axial direction and the circumferential direction with respect to the sleeve bearing 104. Thus, as shown in Fig. 3, the movable drive plate 110 is supported slidably along the axial line direction and the circumferential direction of the crank shaft 90.

On the end surface of the tubular part 111 on the side of the fixed drive plate 102, a receiving hole 111a that is recessed in a ring shape is formed. A plate side holding body 112 and a sliding material 113 are provided in the receiving hole 111a. The plate side holding body 112 is a part for integrally holding ends on one side of the plurality of displacement resistors 120 to be described later as shown in Fig. 4. The plate side holding body 112 includes a metal material (for example, a steel material) formed into a ring shape.

More specifically, a bottomed holding hole 112a where ends of the plurality of displacement resistors 120 are individually fitted is formed along the circumferential direction on one end surface of the ring-shaped plate side holding body 112. The holding hole 112a is formed to have such an inner diameter that allows one end part of the displacement resistor 120 to be slidably fitted therein. The end surface of the plate side holding body 112 on the opposite side of the holding hole 112a is slidably fitted into the receiving hole 111a via the sliding material 113.

The sliding material 113 is a component for reducing the frictional resistance between the plate side holding body 112 and the receiving hole 111a to make them easy to slide. The sliding material 113 includes a material having a friction coefficient lower than the friction coefficient between the plate side holding body 112 and the receiving hole 111a. In the present embodiment, the sliding material 113 includes a resin material formed into a ring shape that fits the receiving hole 111a.

The conical part 114 is a component that sandwiches the V-belt 118 with the conical part 105 of the fixed drive plate 102. The conical part 114 is formed in a tapered surface shape that inclines toward the outside in the radial direction of the tubular part 111. A roller holding part 115 is formed on the surface of the conical part 114 on the opposite side of the fixed drive plate 102. The roller holding part 115 is a component that holds a plurality of roller weights 116 in the state in which displacement is possible along the radial direction of the conical part 114. The roller holding part 115 is formed to be hollowed for each of the roller weights 116. In this case, the roller holding parts 115 are formed to be shallower toward the outside in the radial direction.

The roller weight 116 is a component for pressing the movable drive plate 110 to the side of the fixed drive plate 102 together with a ramp plate 117 by being displaced toward the outside in the radial direction in response to the increase in the rotational speed of the movable drive plate 110. The roller weight 116 includes a metal material formed into a tubular shape. The ramp plate 117 is a component for pressing the roller weight 116 to side of the movable drive plate 110. The ramp plate 117 includes bending a flat plate ring-shaped metal plate to the side of the movable drive plate 110. The ramp plate 117 is fixed to the outer peripheral part of the crank shaft 90 in the state facing the roller holding part 115.

The V-belt 118 is a component for transmitting the rotational driving force of the drive pulley 101 to a driven pulley 150. The V-belt 118 is formed in an endless ring shape having core wire covered with resin material. The V-belt 118 is disposed between the fixed drive plate 102 and the movable drive plate 110 and between a fixed driven plate 151 and a movable driven plate 154 of the driven pulley 150 to be described later, and installed between the drive pulley 101 and the driven pulley 150.

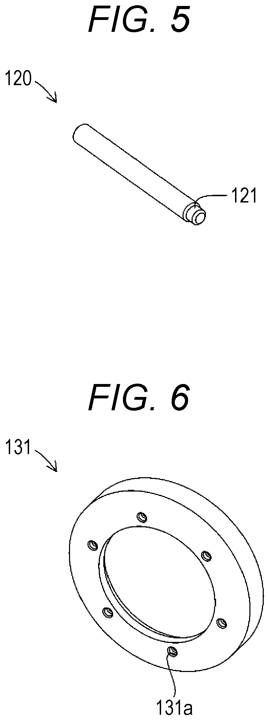

As shown in Fig. 5, the displacement resistor 120 is a component for applying resistance force to the movable drive plate 110 that is displaced to the side of the fixed drive plate 102. The displacement resistor 120 includes a metal material (for example, a steel material) formed into a rod shape. More specifically, the displacement resistor 120 is formed in such length to penetrate through the fixed drive plate 102 and reach the movable drive plate 110 in the state in which the movable drive plate 110 is separated from the fixed drive plate 102 the most (see Fig. 1). The displacement resistor 120 includes a plate fitting end part 121, which fits the holding hole 112a of the plate side holding body 112, having a stepped shape. The outer diameter of the plate fitting end part 121 is made smaller than the body part of the displacement resistor 120.

The plurality of displacement resistors 120 is arranged on the position outside the crank shaft 90 and inside the V-belt 118 in a direction parallel to the crank shaft 90 along the circumferential direction of the crank shaft 90. In this embodiment, 6 displacement resistors 120 are arranged equally to each other along the circumferential direction of the crank shaft 90. In this case, regarding the displacement resistors 120, the plate fitting end part 121, which is an end part on the side of the movable drive plate 110, is held by being fitted to the plate side holding body 112. The end parts on the side of the fixed drive plate 102 penetrate the through holes 103b of the fixed drive plate 102 and held by the pressing side holding body 131.

The pressing mechanism 130 is a group of parts for applying resistance force to the movable drive plate 110 that is displaced to the side of the fixed drive plate 102 by pushing the displacement resistor 120 to the movable drive plate 110. Specifically, the pressing mechanism 130 mainly includes the pressing side holding body 131, a bearing 132, an inner spring holder 133, a resistance spring 134, and an outer spring holder 135.

The pressing side holding body 131 is a component for integrally holding the other end parts of the plurality of displacement resistors 120 as shown in Fig. 6. The pressing side holding body 131 includes a metal material (for example, a steel material) formed into a ring shape. More specifically, the pressing side holding body 131 includes a ring body having an outer diameter allowing the pressing side holding body 131 to slide on the inner peripheral surface of the guide part 108 of the fixed drive plate 102, and having an inner diameter capable of allowing the outer spring holder 135 to penetrate therethrough In addition, a bottomed holding hole 131a where ends of the plurality of displacement resistors 120 are individually fitted is formed along the circumferential direction on one end surface of the ring-shaped pressing side holding body 131.

The holding hole 131a is formed to have such an inner diameter to allow the other end part of the displacement resistor 120 to slidably fit therein. In the state in which the pressing side holding body 131 is slidably fitted to the inner peripheral surface of the guide part 108 of the fixed drive plate 102, the side surface of the pressing side holding body 131 on the opposite side of the holding hole 131a is pressed by the resistance spring 134 via the bearing 132 and the inner spring holder 133. The bearing 132 is a component for connecting the inner spring holder 133 with respect to the pressing side holding body 131 in a relatively rotatable state. The bearing 132 includes a thrust bearing.

The inner spring holder 133 is a component for holding one end part of the resistance spring 134. The inner spring holder 133 includes a metal material formed into a tubular body. More specifically, the inner spring holder 133 includes a storage part 133a formed on the inside where one end part of the tubular body that is slidably fitted on the tubular part of the outer spring holder 135 is folded back to the outside. The storage part 133a stores one end part side of the resistance spring 134.

The resistance spring 134 is a component for generating pressing force that presses the displacement resistor 120 to the movable drive plate 110. The resistance spring 134 includes a coil spring. The resistance spring 134 is disposed coaxially with the crank shaft 90 in the state in which one end part is held by the inner spring holder 133 and the other end part is held by the outer spring holder 135.

The outer spring holder 135 is a component for holding the other end part of the resistance spring 134. The outer spring holder 135 includes a metal material formed into a tubular body. More specifically, the outer spring holder 135 includes a storage part 135a formed on the inside where one end part of the tubular body that is slidably fitted in the tubular part of the inner spring holder 133 is folded back to the outside. The storage part 135a stores the other end part side of the resistance spring 134. A variable mechanism 140 is provided on the other end part side of the outer spring holder 135.

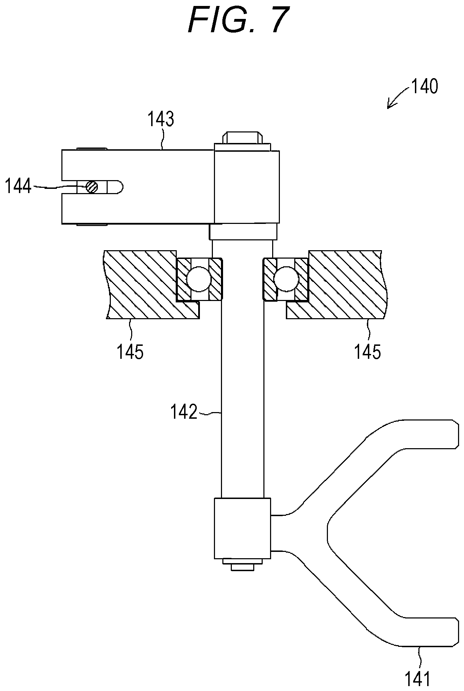

As shown in Fig. 7, the variable mechanism 140 is a group of parts for increasing and decreasing the pressuring force of the pressing mechanism 130 to the movable drive plate 110. The variable mechanism 140 mainly includes a pressing body 141, a rotating shaft 142, an input body 143, and a wire 144. The pressing body 141 is a component for pressing the other end part of the outer spring holder 135. The pressing body 141 is formed in a bifurcated rod body shape made of metal (for example, an aluminum material). In the pressing body 141, in the state in which 2 bifurcated rod body parts press the other end part of the outer spring holder 135, 1 rod body part on the opposite side is fixedly connected to the rotating shaft 142.

The rotating shaft 142 is a component for supporting the pressing body 141. The rotating shaft 142 includes a metal (for example, an aluminum material) rod body. The rotating shaft 142 is supported by a housing 145 of the continuously variable transmission 100 in a rotatable state via a bearing. Among both end parts of the rotating shaft 142, the input body 143 is connected to the end part on the opposite side of the end to which the pressing body 141 is connected.

The input body 143 is a component for rotating the rotating shaft 142 by transmitting the operation force of the driver of the motorcycle mounted with the continuously variable transmission 100 to the rotating shaft 142. The input body 143 includes a metal material (for example, an aluminum material) formed into a tubular shape. Among both end parts of the input body 143, the wire 144 is connected to the end part on the opposite side of the end to which the rotating shaft 142 is connected. The wire 144 is a component for transmitting the operation force of the driver to the input body 143. The wire 144 includes a metal (for example, a stainless-steel material) wire rod. The tip of the wire 144 is connected to the handle (not shown) operated by the driver.

Therefore, when the pressing body 141 receives the outer spring holder 135 and the wire 144 is pulled by the operation of the handle operated by the driver, the variable mechanism 140 rotates the pressing body 141 to the side of the outer spring holder 135 with the rotating shaft 142 as a center while resisting the elastic force of the resistance spring 134. Thus, the variable mechanism 140 can increase and decrease the pressing force of the displacement resistor 120 for pressing the movable drive plate 110 by expanding and contracting the resistance spring 134. In Fig. 1, reference numerals of the receiving hole 111a, the holding hole 112a, the plate fitting end part 121, the holding hole 131a, the storage part 133a, the storage part 135a, and the housing 145 are omitted.

The driven pulley 150 is a part that transmits the rotational driving force of the engine transmitted from the drive pulley 101 via the V-belt 118 to the centrifugal clutch 200. The driven pulley 150 mainly includes the fixed driven plate 151 and the movable driven plate 154.

The fixed driven plate 151 is a part that is rotationally driven in the state in which the fixed driven plate 151 sandwiches and holds the V-belt 118 with the movable driven plate 154. The fixed driven plate 151 includes a metal material (for example, an aluminum material) formed into a conical tubular shape. The fixed driven plate 151 is fixedly attached on a driven sleeve 152 in the state in which the surface on the convex side faces the side of the movable driven plate 154.

The driven sleeve 152 is a metal tubular part that is rotationally driven integrally with the fixed driven plate 151. The driven sleeve 152 is attached to a drive shaft 153 via a bearing in a relatively rotatable state. The drive shaft 153 is a metal rotating axis body for driving the rear wheel of the motorcycle mounted with this continuously variable transmission 100 via a transmission (not shown). In this case, the rear wheel of the motorcycle is attached to the one end part (right side in the figure) of the drive shaft 153.

The movable driven plate 154 is a part that is rotationally driven in the state in which the movable driven plate 154 sandwiches and holds the V-belt 118 with the fixed driven plate 151. The movable driven plate 154 includes a metal material (for example, an aluminum material) formed into a conical tubular shape. The movable driven plate 154 is slidably fitted with respect to the driven sleeve 152 in the axial direction in the state in which the surface on the convex side faces the fixed driven plate 151.

On the other hand, on the surface of the movable driven plate 154 on the concave side, a torque spring 155 is provided between this surface and a drive plate 201 of the centrifugal clutch 200. The torque spring 155 is a coil spring that elastically presses the movable driven plate 154 to the side of the fixed driven plate 151. That is, the continuously variable transmission 100 changes the rotational speed of the engine in a stepless manner in accordance with the magnitude correlation between the diameter sandwiching the V-belt 118 that is defined by the interval between the fixed drive plate 102 and the movable drive plate 110 and the diameter sandwiching the V-belt 118 that is defined by the interval between the fixed driven plate 151 and the movable driven plate 154. In addition, the centrifugal clutch 200 is provided on tip sides of the driven sleeve 152 and the drive shaft 153.

The centrifugal clutch 200 is not directly related to the present invention. However, the centrifugal clutch 200 is a mechanical device that is connected to the continuously variable transmission 100. Therefore, the centrifugal clutch 200 will be briefly described. The centrifugal clutch 200 is a mechanical device that transmits or cuts off the rotational driving force of the engine transmitted via the continuously variable transmission 100 with respect to the drive shaft 153. The centrifugal clutch 200 mainly includes the drive plate 201, 3 clutch weights 203, and a clutch outer part 206.

The drive plate 201 is a component that is rotationally driven integrally with the driven sleeve 152. The drive plate 201 includes a metal material formed into a stepped disk shape. At the outer edge part of the board surface of the drive plate 201, 3 swing support pins 202 are provided along the circumferential direction in a standing state. The clutch weights 203 are respectively supported by these swing support pins 202.

The 3 clutch weights 203 are components for transmitting or cutting off the rotational driving force from the engine with respect to the drive shaft 153 in accordance with the rotational speed of the drive plate 201. The clutch weight 203 includes a metal material (for example, a zinc material) formed in a curved shape that extends along the circumferential direction of the drive plate 201. In this case, the 3 clutch weights 203 are pulled radially inward with respect to each other by a connection spring 204. The clutch shoe 205 is a component for increasing the friction force with respect to the inner peripheral surface of the clutch outer part 206. The clutch shoe 205 includes a friction material formed into a plate shape extending in an arc shape.

In the clutch weights 203, in the state in which the clutch shoe 205 faces the inner peripheral surface of the clutch outer part 206, one end part thereof is supported by the swing support pin 202 in a swingable state. Thus, in the 3 clutch weights 203, the clutch shoe 205 is brought into contact with or separated from the inner peripheral surface of the clutch outer part 206 in accordance with the rotational speed of the drive plate 201.

The clutch outer part 206 is a part that is rotationally driven integrally with the drive shaft 153. The clutch outer part 206 includes a metal material formed into a cup shape that covers the outer peripheral surface from the drive plate 201 to the clutch weights 203. Thus, the clutch outer part 206 transmits or cuts off the rotational driving force from the engine with respect to the drive shaft 153 by bringing the clutch weight 203 into contact with the clutch outer part 206 via the clutch shoe 205.

### (Operation of continuously variable transmission 100)

Next, the operation of the continuously variable transmission 100 having the configuration above will be described. The continuously variable transmission 100 functions by forming a part of the power transmission mechanism disposed between the engine and the rear wheel serving as a driving wheel of an automatic motorcycle (for example, a scooter). In the continuously variable transmission 100, the elastic force generated by the pressing mechanism 130 with the resistance spring 134 constantly acts on the movable drive plate 110 via the displacement resistor 120. Therefore, the movable drive plate 110 is constantly pressed in the direction to be separated with respect to the fixed drive plate 102.

First, description will be given on the premise that the adjustment width of the pressing force of the pressing mechanism 130 that can be adjusted by the variable mechanism 140 is set to the center value. In the continuously variable transmission 100, when the engine is in an idling state, the movable drive plate 110 is located at a position that is separated from the fixed drive plate 102 the most (see Fig. 1 and Fig. 2). That is, in the continuously variable transmission 100, the movable drive plate 110 is rotationally driven integrally with the fixed drive plate 102, V-belt 118, the pressing side holding body 131 of the pressing mechanism 130, the displacement resistor 120, and the plate side holding body 112.

However, in the continuously variable transmission 100, during the idling state, the centrifugal force acting on the roller weight 116 is smaller than the total elastic force of the resistance spring 134 and the torque spring 155. Therefore, the V-belt 118 is located at the innermost peripheral part of the drive pulley 101, and thus, the movable drive plate 110 is separated from the fixed drive plate 102. In this case, in the centrifugal clutch 200, the centrifugal force acting on the clutch weight 203 is smaller than the elastic force (tensile force) of the connection spring 204. Therefore, the clutch shoe 205 does not come into contact with the inner peripheral surface of the clutch outer part 206, and the rotational driving force of the engine is not transmitted to the drive shaft 153.

Next, in the continuously variable transmission 100, when the accelerator operation of the automatic motorcycle by the driver increases the rotational speed of the engine (see Fig. 3), the centrifugal force acting on the roller weight 116 becomes larger than the total elastic force of the resistance spring 134 and the torque spring 155 as the rotational speed of the engine increases. Thus, the movable drive plate 110 is displaced to the side of the fixed drive plate 102.

In this case, the movable drive plate 110 has to be displaced on the side of the fixed drive plate 102 while resisting the elastic force of the resistance spring 134 in addition to the torque spring 155. Therefore, the continuously variable transmission 100 shifts the transmission speed at higher rotational speed compared with typical continuously variable transmissions that have no pressing mechanism 130 or displacement resistor 120. In the centrifugal clutch 200, when the centrifugal force acting on the clutch weight 203 becomes larger than the elastic force (tensile force) of the connection spring 204, the clutch shoe 205 comes into contact with the inner peripheral surface of the clutch outer part 206, and the rotational driving force of the engine is transmitted to the drive shaft 153.

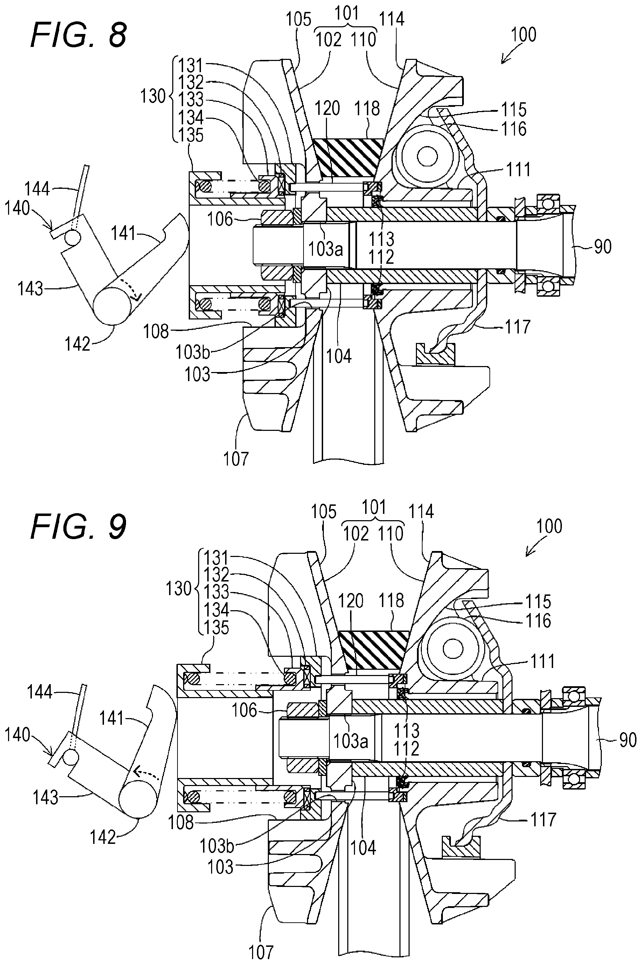

Next, when the driver wants to change the shift characteristics of the continuously variable transmission 100, the driver operates the operating handle to push down the pressing body 141 to the side of the outer spring holder 135 or the opposite side of the outer spring holder 135 as shown in Fig. 8 and Fig. 9. Therefore, in the continuously variable transmission 100, when the pressing body 141 is pushed down to the side of the outer spring holder 135 (see the dashed line arrow in Fig. 8), the resistance spring 134 is compressed and the force of the displacement resistor 120 pressing the movable drive plate 110 becomes stronger. Therefore, the continuously variable transmission 100 has to have larger centrifugal force to displace the movable drive plate 110 to the side of the fixed drive plate 102, and the shift timing is shifted to the side of the high rotational speed.

On the other hand, in the continuously variable transmission 100, when the pressing body 141 is pushed down to the opposite side of the outer spring holder 135 (see the dashed line arrow in Fig. 9), the resistance spring 134 extends and the force of the displacement resistor 120 pressing the movable drive plate 110 becomes weaker. Therefore, in the continuously variable transmission 100, the centrifugal force necessary for displacing the movable drive plate 110 to the side of the fixed drive plate 102 becomes smaller, and the shift timing is shifted to the side of the low rotational speed.

As explained in the above operation description, according to the above embodiment, the continuously variable transmission 100 uses the displacement resistor 120 and the pressing mechanism 130 to directly apply a load (reaction force) with respect to the movable drive plate 110 that is displaced to the side of the fixed drive plate 102 among the fixed drive plate 102 and the movable drive plate 110 forming the drive pulley 101. Therefore, it is possible to suppress the size increase, complication, and weight increase of the device configuration compared with the typical technology.

Furthermore, the practice of the present invention is not limited to the above embodiment, and various modifications can be made without departing from the gist of the present invention. In the following variations, configurations that are similar to that of the above embodiment will be provided with the same reference numerals and the description thereof will be omitted.

For example, in the above embodiment, the displacement resistor 120 includes of a round rod body. However, the displacement resistor 120 may be formed to abut on the movable drive plate 110 from the side of the fixed drive plate 102, and the embodiment is not necessarily limited to the above. Therefore, the displacement resistor 120 may be formed in other shapes besides a rod body such as a plate shape or a tubular shape. In addition, the number of displacement resistor 120 provided is also not limited to 6 and may be 5 or less or 1 or more.

In addition, in the above embodiment, the displacement resistor 120 has a stepped shape, and includes the plate fitting end part 121, which fits the plate side holding body 112, narrower than the body part serving as the previous part. Thus, the displacement resistor 120 can decrease the diameter of the receiving hole 111a of the movable drive plate 110 while maintaining the rigidity and secure the large diameter of the conical part 114. However, the displacement resistor 120 may include a round rod body having only the same outer diameter.

In addition, in the above embodiment, the displacement resistor 120 is formed to abut on the movable drive plate 110 via the plate side holding body 112 and the sliding material 113. Thus, since the displacement resistors 120 are held by the plate side holding body 112, the continuously variable transmission 100 can improve the rigidity of the overall displacement resistors 120. Further, via the plate side holding body 112, a wide range of surface contact that increases the contact surface with respect to the movable drive plate 110 can be obtained. Therefore, issues such as abrasion and seizure due to friction can be suppressed. The movable drive plate 110 is basically rotationally driven synchronously with the fixed drive plate 102. However, depending on the torque difference between the engine side and the centrifugal clutch 200 side, some deviation may occur. For this reason, the displacement resistor 120 is provided in a relatively rotatable state with respect to the movable drive plate 110, and the damage can be suppressed.

In addition, between the plate side holding body 112 and the movable drive plate 110 of the continuously variable transmission 100, a sliding material 113 that reduces friction between the both members is provided. Therefore, distortion of the displacement resistor 120, abrasion of the plate side holding body 112, and seizure between both members can be suppressed. In this case, the sliding material 113 may include materials having a friction coefficient lower than the friction coefficient between the plate side holding body 112 and the movable drive plate 110 or materials that decrease the friction coefficient between the plate side holding body 112 and the movable drive plate 110 (for example, lubricating oil or grease).

However, the displacement resistor 120 may be formed to directly abut on the movable drive plate 110 without having the plate side holding body 112 and the sliding material 113. In addition, the displacement resistor 120 may be formed to directly abut on the movable drive plate 110 without having either of the plate side holding body 112 or the sliding material 113.

In addition, in the above embodiment, the displacement resistor 120 is formed in a manner that the movable drive plate 110 is elastically pressed by the pressing mechanism 130. That is, the pressing mechanism 130 corresponds to the pressing section according to the present invention. However, the pressing section just has to elastically press the displacement resistor 120 to the movable drive plate 110, and is not necessarily limited to the above embodiment. Therefore, regarding the pressing section, the resistance spring 134 may include other elastic bodies such as a plurality of disk springs and urethane resin. The pressing section may include a pneumatic or hydraulic cylinder, an electric motor, a solenoid, a magnet, or the like. When the pressing section includes a pneumatic or hydraulic cylinder, an electric motor, a solenoid or the like, a control device for controlling the operations is preferably provided.

In addition, in the above embodiment, the continuously variable transmission 100 includes the variable mechanism 140. Thus, the continuously variable transmission 100 can freely change the shift characteristics by changing the pressing force by the pressing mechanism 130. That is, the variable mechanism 140 corresponds to the variable section according to the present invention. However, the continuously variable transmission 100 may be formed without having the variable mechanism 140. In addition, in the continuously variable transmission 100, when the pressing section includes an electric motor or the like for example, a control device that controls the operations of the electric motor or the like corresponds to the variable section.

### LIST OF REFERENCE NUMERALS

90... crank shaft,
100...continuously variable transmission, 101...drive pulley, 102...fixed drive plate,
103...disk part, 103a... through hole, 104...sleeve bearing, 105...conicalpart,
106...nut, 107...heat radiation fin, 108...guide part,
110...movable drive plate, 111...tubular part, 111a... receiving hole, 112...plate side holding body, 112a...holding hole, 113...sliding material, 114...conical part,
115...roller holding part, 116...roller weight, 117...ramp plate, 118...V-belt,
120...displacementresistor, 121...plate fitting end part,
130...pressing mechanism, 131...pressing side holding body, 131a...holding hole,
132...bearing, 133...inner spring holder, 133a...storage part, 134...resistance spring,
135...outer spring holder, 135a...storage part,
140...variable mechanism, 141...pressing body, 142...rotating shaft, 143...input body,
144...wire, 145...housing,
150...driven pulley, 151...fixed driven plate, 152...driven sleeve, 153...drive shaft,
154...movable driven plate, 155...torque spring,
200...centrifugal clutch, 201...drive plate, 202...swing support pin, 203...clutch weight,
204...connection spring, 205...clutch shoe, 206...clutch outer part.

## Claims

1. A continuously variable transmission, comprising:
a drive pulley that includes a fixed drive plate rotationally driven integrally with a crank shaft that is rotationally driven by an engine and a movable drive plate oppositely disposed with respect to the fixed drive plate, and approaches or become separated with respect to the fixed drive plate on the crank shaft in accordance with centrifugal force by rotational drive of the crank shaft;
a driven pulley that is oppositely disposed in a radial direction side of the drive pulley, and transmits rotational driving force of the engine to an output side;
an endless belt that is installed between the drive pulley and the driven pulley;
a displacement resistor that abuts on the movable drive plate from a side of the fixed drive plate side; and
a pressing section that elastically presses the displacement resistor to the movable drive plate.

2. The continuously variable transmission according to claim 1, further comprising
a variable section that varies pressing force by the pressing section.

3. The continuously variable transmission according to claim 1 or 2, wherein
the pressing section includes a resistance spring including a coil spring.

4. The continuously variable transmission according to any one of claims 1 to 3, wherein
a plurality of the displacement resistors includes a rod body and is adjacently disposed along a circumferential direction around the crank shaft, and
the displacement resistors are held by a pressing side holding body having ends on a side of the pressing section formed in a ring shape and a plate side holding body having ends on a side of the movable drive plate formed in a ring shape.

5. The continuously variable transmission according to claim 4, further comprising
a sliding material that is disposed between the plate side holding body and the movable drive plate and reduces friction between both members.

6. The continuously variable transmission according to any one of claims 1 to 5, wherein
the displacement resistor is disposed to penetrate the fixed drive plate, and
the pressing section is provided on an opposite side of the movable drive plate with respect to the fixed drive plate.
